Europäisches Patentamt

European Patent Office

Office européen des brevets

(11) Publication number: **0 098 547**
A1

(12) # EUROPEAN PATENT APPLICATION

(21) Application number: 83106439.9

(51) Int. Cl.³: **F 16 L 55/16**

(22) Date of filing: 01.07.83

(30) Priority: 02.07.82 GB 8219117

(71) Applicant: **Trio Engineering Limited, c/o 4, Wests Centre Bath Street, St. Helier Jersey (GB)**

(43) Date of publication of application: **18.01.84 Bulletin 84/3**

(72) Inventor: **Wood, Eric, 52 Hatton Park Road, Wellinborough Northants (GB)**

(84) Designated Contracting States: **AT BE CH DE FR GB IT LI LU NL SE**

(74) Representative: **Denmark, James, c/o Bailey Walsh & Co. 5 York Place, Leeds LS1 2SD Yorkshire (GB)**

(54) Improvements relating to the lining of passageways.

(57) The specification pertains to the lining on site of pipelines and passageways of long length by a lining tube formed from sheet material (11) formed into a pipe (12) and welded, deflecting the tube so that it is deflected into smaller diametral size, holding the tube in the deflected condition, feeding the deflected and held tube into the passageway to be lined, and releasing the hold on the tube so that it deflects or is deflected back to its original form and lines the pipeline or passageway.

-1-

## Improvements relating to the lining of passageways

This invention relates to the lining of passageways especially long underground passageways, such as sewers and pipelines.

There have been many proposals for the lining of passageways because throughout the world there is a very large number of passageways in need of repair and/or restoration. Passageways may need repair because of a number of reasons. For example, an underground sewer may be leaking to such an extent that sewage is leaking into the surrounding subsoil or a pipeline may be leaking to such an extent that ground water and other liquid deposits are leaking through the pipeline into the interior of the pipeline, which may be carrying a medium which is becoming contaminated by the ingressing liquid. Again, the passageways may require repairs where they are not actually leaking, but are corroding or eroding, which could lead to leakage. Still further, it may be required to line a passageway in order to change its function e.g. it may be desired to line an otherwise corrosive passageway to carry corrosive material, or it may be desirable to insert a liner in order to enable the passageway to carry medium under pressure, the liner providing a means of supporting or assisting in supporting the pressure forces of the pressure medium.

It will be appreciated that depending upon requirements, liners for pipelines vary from thin, flimsy forms of plastics foil where a surface is simply to be protected from an environment, to heavy resin impregnated felts where the liner is to support the pressure of the medium flowing in the passageway and to protect the passageway surface from chemical attack and impacts from objects and debris being carried by the medium.

In all of the known systems for passageway lining there is a common problem of inserting long length linings (over 1,000 feet) into a pipeline without having to provide the linings in sections and having to provide many joints which can be a source of leakage. The problem of providing sealed jointing with the heavier gauge liners has not fully been solved for cases where the passageway carries a fluid, such as gas, under pressure.

It is possible to insert long lengths of flimsy material into passageways by everting it thereinto, but such liners cannot be used to increase the pressure containing capability of the passageway.

Heavy resin impregnated felt liners must of necessity be of finite length as otherwise they become impossible to handle.

There is, therefore, a real need to provide a method of lining passageways with a liner which can be made in long lengths, and is robust enough to contain fluid under pressure.

The present invention deals with this need and in accordance with the invention there is provided a method of lining passageways comprising forming a tubular liner of plastics at the site of the passageway to be lined, by forming plastics sheet material into a pipe on site by welding, fusing or the like, such liner being of such a resiliency that it can be flexed but will return or tend to return to the unflexed condition when released, deflecting the tube to a condition in which the largest diametral dimension of the deflected tube is less than the outer diameter of the undeflected tube, releasably holding the tube, whilst in deflected condition, inserting the held, deflected tube into the passageway to be lined, and releasing the hold on the tube when the tube is in the passageway and either allowing or causing the tube to return to its undeflected condition.

The pipe forming, deflecting, holding and inserting the tube in the passageway preferably is effected in a continuous operation.

After the tube has been placed in the passageway and the holding means released, the interior of the tube may be pressurised in order fully to redeflect the tube to the circular form, or such operation may be effected by passing a pipeline pig through the tube.

The tube may be deflected to horse-shoe or clover leaf shape in cross section and the holding means may be a negative internal pressure, a tape or sleeve of plastics foil or a combination of any such means. In the case of a tape it may be applied to the tube with adhesive and be such as to be releasable by peeling the tape from the tube. Where a sleeve is used it may have a seam of weakening which can be ruptured, for example by igniting a fuse embodied therein along such seam.

If it is desired to provide a liner in the passageway which has a higher hoop stress than a single tube, the process of the invention can be repeated a number of times, each subsequent tube being inserted in the previous tube, until a liner of the desired thickness is formed.

An embodiment of the invention will now be described, by way of example, with reference to the accompanying

0098547

-4-

diagrammatic drawings, wherein:-

Fig. 1 is a perspective view of apparatus for carrying out the method of the invention;

Fig. 2 is a perspective view illustrating another method of forming a tube;

Fig. 3 is an end view of the arrangement shown in Fig. 2;

Fig. 4 is a sectional view showing a tube in the deflected condition;

Fig. 5 is a view similar to Fig. 3, showing how a number of tubes may be placed one within another;

Fig. 6 shows how the method is carried out in lining a passageway in the form of an underground pipeline;

Fig. 7 is a sectional side view showing how the end of the tubular pipe may be anchored when positioned in the passageway.

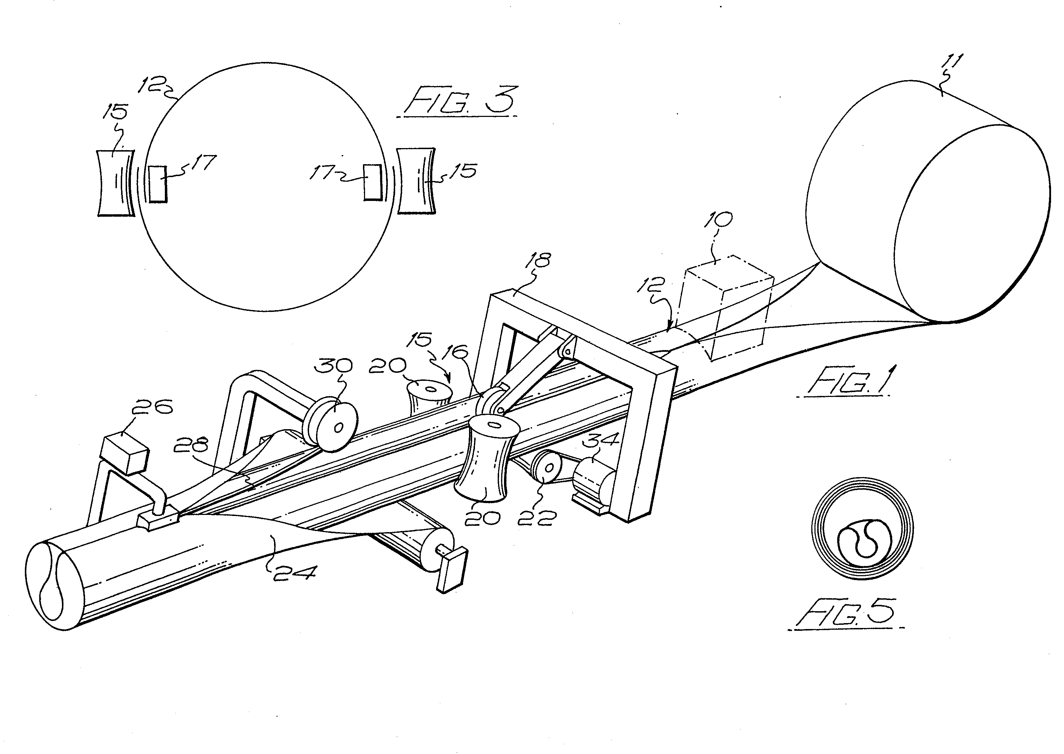

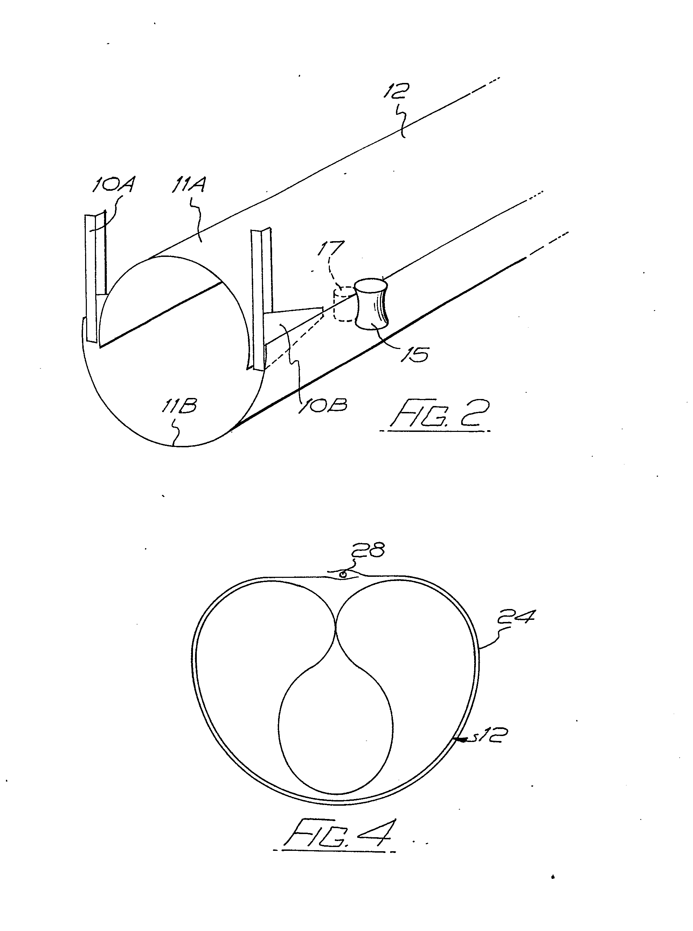

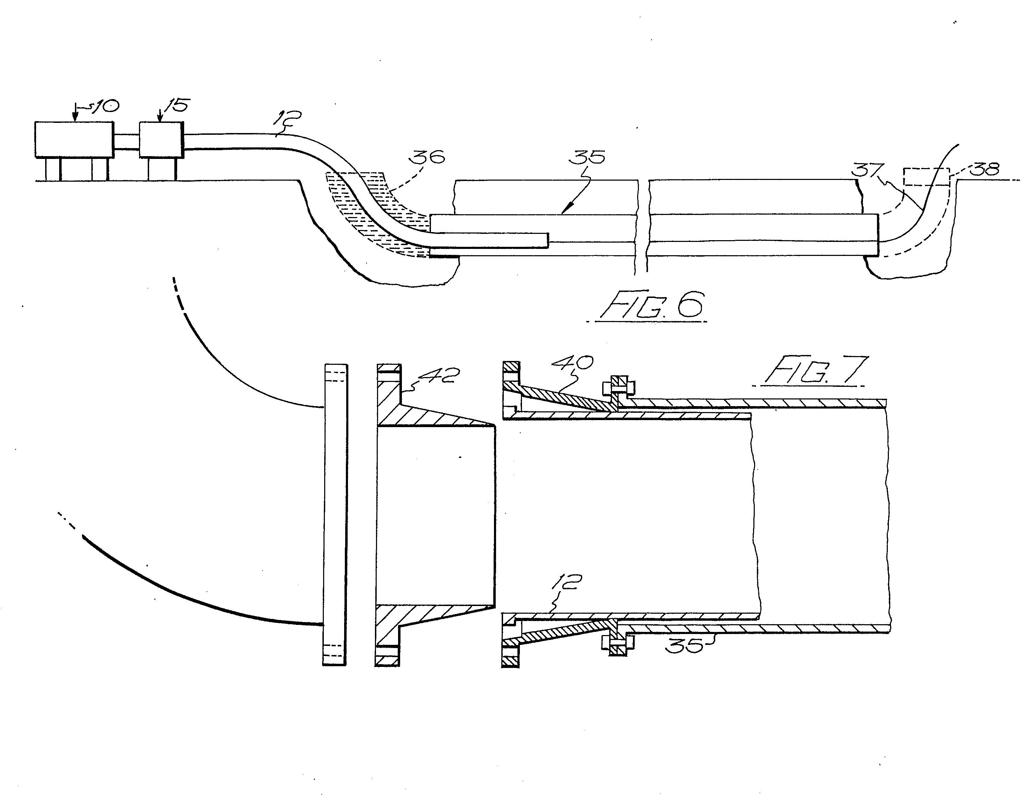

Referring to the drawings, and firstly to Fig. 1, reference 10 indicates a welding apparatus for producing a tubular plastics material pipe 12 from plastics sheet material 11 in roll form. The plastics material tube passes through a forming apparatus 15, comprising a deflecting roller 16 carried by a frame 18, and folding rollers 20. The deflecting roller 16 deflects the upper central portion of the tube which is semi-rigid so that it takes up a hore-shoe type configuration in cross section as shown in Fig. 4 and the rollers 20, which are waisted as shown press the sides of the horse-shoe cross section together. A driving roller 22 drives and supports the tube 12. Said roller 22 is driven by a motor 34.

Figs. 2 and 3 show an alternative method of forming the tube or pipe 12 on site, wherein two webs 11A and 11B of the plastics material are curved into semi-circular shape so that the edges overlap and between the overlapped edges are heating blades 10A, 10B which soften the edge regions of the webs. Further along the direction of movement of the webs as indicated by arrow 13, nip rollers 15, 17 of the configuration shown in Fig. 3, press the still soft overlapped regions together so that they will fuse one to the other to form in complete pipe 12, which is deflected as described herein.

As the thus deflected tube 12 proceeds from the deflecting apparatus 15, it is wrapped with a plastics foil or fabric 24 which may be of polyvinyl chloride and is wrapped around the tube 12 as shown so that the edges thereof overlap at a hot melt bonder unit 26, and such edges are sealed in order to form a sleeve around the deflected tube 12 to hold it in the deflected condition. Along the seam there is inserted a fuse wire 28 which is supplied from a fuse supply reel 30. the purpose of the fuse wire will become clear hereinafter.

Referring now to Fig. 6, the thus deflected tube 12, held in deflected condition by the foil 24 is fed directly into a passageway 35 to be lined with the material of tube 12. Insertion into the passageway 35 is facilitated by virtue of the fact that the tube 12 is held in deflected condition and in this condition the largest diametral dimension of the tube 12 is less than the outer diameter of the tube prior to deflection and is smaller than the inner diameter of the passageway to be lined. In Fig. 6 the free end of the tube 12 is shown as being connected to a pulling member 37 in the form of a rope, and additionally the tube 12 is shown as being led through a lead-in pipe 36 and out of a tail pipe 38. The pipes 36 and 38 are connected to the ends of the underground pipeline 30 in a watertight manner, and in fact the passageway 30 and the pipes 36 and 38 and the inside of the pipe 12 are flooded with water in order to facilitate travel of the tube 12 through the passageway 30. When the tube 12 is in position, the water can be removed from the passageway, but it may be desireable to introduce a lubricant into the water, such as a soap composition in order that the tube 12 which in itself is reasonably bendable, can easily follow bends in the passageway 35. The free end of the tube 12 may alternatively be sealed in order that the interior of the pipe does not become flooded with water, although it is desireable that the interior of pipe 35 will be flooded. It is desireable that the pipe 12, which may have to travel long lengths, e.g. over 1,000 ft. should have as near neutral buoyancy in any liquid contained in the passageway 37, as otherwise there could be substantial drag forces exerted on the tube 12 as it is inserted into the pipeline.

The process up to the stage of placement of the lining tube 12 in the pipeline 35 is continuous, which provides for minimum operation time, but the process can be stopped and started satisfactorily, by cutting off or displacing the welding apparatus, so that the process can be operated on a step by step basis.

When the tube 12 is in position, the holding effect of the sleeve 24 is released, and in this example this is achieved by igniting the fuse 28 which ruptures the sleeve 24, and allows the deflected tube 12 once more to expand to the circular condition and into a position lining the interior of the passageway 30. The return of the tube 12 to circular form may be assisted by pressurising the interior of the tube 12 with fluid under pressure or by passing a pipeline pig therethrough from end to end.

In relation to the passageway or pipeline to be lined, the lining tube 12 may be of slightly larger dimeter or smaller diameter than that of the passageway or pipeline. When the tube 12 is of slightly larger diameter, when it returns to its circular form in the passageway or pipeline it snaps into position and in so doing becomes circumferentially compressed in that it is prevented from taking up its natural size. When the lining tube 12 is sized to snap into a circumferentially stressed condition as described, it is preferably only slightly larger in diameter than the pipeline or passageway to ensure that the tube 12 does snap into circular form. This arrangement is useful when the lining operation is to provide for example a liquid impermeable barrier rather than a stress taking member.

When the tube 12 is sized to be of smaller diameter than the pipeline or passageway surface to be lined, it may be only slightly smaller or significantly smaller. One may arrange for the lining diameter to be slightly smaller than the passageway or pipeline surface where the lining tube has to carry fluid under pressure and must expand under the said pressure, and thereby contribute to taking a certain amount or all of the hoop stress in order to contain fluid.

When the tube 12 is of significantly less diameter than the pipeline or passageway the fold in the tube 12 as formed by rollers 16, 20 may be filled with a filling material such as mastic which spreads round the tube to fill the clearance between the tube 12 and the pipeline or passageway surface, when the hold on the deflected tube 12 is released.

In the case where the liner has to be sufficiently strong to contain pressure forces when fluid medium under pressure passes through the passageway, the process as described in relation to Fig. 6, can be repeated, each subsequent tube being placed inside the previous tube in the manner described, and so that there is a small peripheral clearance between each lining tube and the inner surface of the tube in which it is located. Fig. 5 shows how a number of pipes have been positioned one within the other, and also shows a final pipe whilst still held in the deflected condition, inside the previous circular form. By this repetition of the process, a liner of any desired thickness and hoop strength within the limits can be built up.

It would not be possible to insert a single line of the same overall thickness as a number of pipes, because it would be extremely difficult to deflect such a one-piece liner to make it smaller in overall dimensions than the passageway, and it would not bend longitudinally to pass through the pipes 36 and 38 and any other bends in the passageway 35.

The invention is paticularly suitable for pipelines and passageways which are neither too small not too large. For very large passageways i.e. one in which human beings can freely walk or move, other lining techniques can be used, because there is not the same difficulty in the creation of joints between sections of liner, and for very small pipelines, it becomes extremely difficult to deflect the tubular member 12 down to a smaller size for insertion in the pipeline and the frictional forces created by endeavouring to direct a deflected tube around bends and curves becomes prohibitive. The invention can however, be used over a wide range of passageway sizes for example from pipelines of the order of 4 or 5 inches diameter up to passageways of the order of 4 to 5 feet.

The tube may be formed of any suitable material such as polypropylene or other material having a plastic memory such as high density polyethylene and preferably is of a thickness to give the required flexing and recovery characteristics. Polypropylene of a thickness of 1/8" appears to give satisfactory characteristics in this respect.

One method of releasing the hold on the pipe 12 when in deflected condition in the passageway has been described, i.e. the use of a fuse, but other methods may be adopted. For example, the holding means may be severed by a cutting means, or it may be in the form of a tape which is adhesively applied to the tube 12, but can be peeled therefrom, or it may be provided with a line of weakening which is fractured as a result of pressurisation of the interior of the tube 12 after it has been placed in position. An alternative holding arrangement comprises a mandrel of appropriate shape, heated if necessary of a location to size the tube, and having ducting whereby, when the tube is over the mandrel, and a source of negative pressure is applied to the ducting, the tube is sucked onto the mandrel, and in being so sucked, the sectional shape changes such that the largest diametral dimension is less than that of the tube before deflection. The feeding of the tube of the mandrel continues with the advancing end sealed off, and air being bled into the tube interior as required through a fan which is overrun by the air being induced into the tube as long as the tube is being fed into the passageway but when movement stops the fan runs to maintain the negative internal pressure and the tube is so held (being sealed at the advancing end if necessary) until it is placed in the passageway when the source of negative prssure is released and air under pressure is supplied to the ducting inflating the tube to its original form. In any event, after the hold of the holding means has been released, the tube 12 will tend to return to its initial undeflected condition, but to ensure that it s does it may be desireable to pressurise the interior of the tube 12 or to pass a pipeline pig therethrough. If the tube 12 is of slightly larger diameter than the internal diameter of the passageway 35, it will finally be placed in position by a snapping action which results in the liner tube being placed in compression, as described herein. Where a multi-layered liner is built up, it can be arranged that each subsequent pipe is snapped into the previous tube in the manner described above.

Referring finally to Fig. 7, in this drawing, there is shown an arrangement illustrating how the end of the line may be anchored by the use of complimentary wedging collars. An outer frusto-conical collar 40 is bolted to the end of the pipeline 35, and the free end of the liner 12 overhangs the bolt joint by an amount equal to the length of the collar 40. A male collar 42 having a frusto-conical outer surface is inserted into the free end of the liner 12 such that bolt holes in flanges of collars 40 and 42 become aligned and bolts are pressed therethrough and tightened with the effect that the free end of the lining tube 12 becomes trapped and wedged between the frusto-conical faces of the two collars 40 and 42. Other arrangements for fixing the ends of the lining tube can of course be used.

The invention also provides a passageway lined in accordance with the method.

The arrangement described envisages the welding of strip material 11 by means of a longitudinally extending weld. Instead of this arrangement, a strip of plastics sheet material may be helically wound and the adjacent edges welded together along a helical weld line. The welded plastics sheet material may be welded into tubes or pipes of finite length which subsequently are inserted into the passageway in the manner described.

CLAIMS

1.  A method of lining passageways comprising forming a tubular liner of plastics at the site of the passageway to be lined, by forming plastics sheet material into a pipe on site by welding, fusing or the like, such liner being of such a resiliency that it can be flexed but will return or tend to return to the unflexed condition when released, deflecting the tube to a condition in which the largest diametral dimension of the deflected tube is less than the outer diameter of the undeflected tube, releasably holding the tube, whilst in deflected condition, inserting the held, deflecting tube into the passageway to be lined, and releasing the hold on the tube when the tube is in the passageway and either allowing or causing the tube to return to undeflected condition.

2.  A method according to Claim 1 wherein, the pipe forming, deflecting, holding and inserting the tube in the passageway is effected in a continuous operation.

3.  A method according to Claim 1 or 2 wherein, after the tube has been placed in the passageway and the holding means released, the interior of the tube is pressurised or has a deflecting member therein to redeflect the tube to a circular form.

4.  A method according to any of the preceding Claims wherein, the tube is deflected to a horse shoe or clover leaf shape in cross section.

5.  A method according to any of Claims 1 to 4 wherein, the holding means is an internal negative pressure, a tape or sleeve, or a combination of any such means.

6.  A method according to Claim 5 wherein, a sleeve plastics foil is the holding means and it has a seam of weakening which can be ruptured, such as for example by igniting the fuse embodied therein.

7. A method according to Claim 4 wherein, the holding means is a negative internal pressure which is released when the pipe is placed in the passageway.

8. A method according to any preceding Claim wherein, the method is repeated producing pipe liners of progressively smaller dimension, in order to form a multi-layer liner in the passageway.

9. A passageway lined by the method according to any one of the preceding Claims.

FIG. 3

FIG. 1

FIG. 5

0098547

1/3

_FIG. 2_

_FIG. 4_

*FIG.6*

*FIG.7*

3/3

0098547

**European Patent Office**

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| Y,A | EP-A-0 000 576 (TRIO ENGINEERING) * Claims 1, 2, 3, 7, 8, 9, 11, 14 * | 1-9 | F 16 L 55/16 |
| A | DE-A-2 629 214 (A/S DEN NORSKE REMFABRIK) * Claims 1, 2, 3; figure 4 * | 1,3-5, 7 | |
| Y | DE-B-2 135 689 (BOGREZ et al.) * Claim 1; figure 1 * | 1 | |
| A | DE-A-2 728 056 (ARIKAN) | | |
| A | DE-A-2 203 466 (VOLUME PAC AB) | | |

TECHNICAL FIELDS SEARCHED (Int. Cl. ³)

F 16 L 55/00
E 03 F 3/00

The present search report has been drawn up for all claims

| Place of search | Date of completion of the search | Examiner |
|---|---|---|
| BERLIN | 15-09-1983 | SCHLABBACH M |